# EUROPEAN PATENT SPECIFICATION

(11) **EP 2 623 486 B1**
(45) Date of publication and mention of the grant of the patent: **06.11.2019**
(21) Application number: 11829024.6
(22) Date of filing: 26.09.2011
(51) Int. Cl.: C05C 1/00, C05C 3/00, C05C 5/02, A01N 37/44, C05F 11/10, C05G 3/00

(54) **5-AMINOLEVULINIC ACID-CONTAINING SOLID FERTILIZER AND PROCESS FOR PRODUCING SAME**
5-AMINOLÄVULINSÄURE-HALTIGE FESTSTOFF DÜNGER UND VERFAHREN ZU IHRER HERSTELLUNG
ENGRAIS SOLIDE CONTENANT DE L'ACIDE 5-AMINOLÉVULINIQUE ET SON PROCÉDÉ DE PRODUCTION

(30) Priority: 30.09.2010 JP 2010220455
(43) Date of publication of application: 07.08.2013
(73) Proprietor: COSMO TRaDE & SERVICE CO., LTD., Minato-ku Tokyo 105-8325 (JP)
(72) Inventor: FUNADA, Shigeyuki, Kasukabe-shi Saitama 344-0066 (JP); IWAI, Kazuya, Tokyo 105-8325 (JP)
(74) Representative: Blodig, Wolfgang
(86) International application number: PCT/JP2011/071875
(87) International publication number: WO 2012/043470

(56) References cited:
- EP-A1- 0 514 776
- EP-A2- 0 714 600
- WO-A1-2007/029775
- WO-A1-2008/126374
- WO-A1-2010/050179
- WO-A1-2012/003782
- JP-A- 11 158 010
- Sylwester Smolen et al: "THE EFFECT OF PLANT BIOSTIMULATION WITH 'PENTAKEEP V' AND NITROGEN FERTILIZATION ON YIELD, NITROGEN METABOLISM AND QUALITY OF SPINACH", Acta Sci. Pol. Hortorum Cultus, 5 March 2010 (2010-03-05), pages 25-36, XP055414893, Retrieved from the Internet: URL:http://wydawnictwo.up.lublin.pl/acta/h ortorum_cultus/2010/acta_hort_9(1)_art_03. pdf

## Description

### [Technical Field]

The present invention relates to a solid fertilizer having a plant growth promoting effect and a process for producing the same.

### [Background Art]

It is known that a 5-aminolevulinic acid, a derivative thereof, or a salt of the acid or the derivative exhibits an enhancement of photosynthetic activity, an enhancement of CO₂ absorption capability, an action of suppressing respiration, an action of enhancing the chlorophyll content, and also an excellent action of promoting growth. As a result, the compounds are known to show excellent effects in the promotion of root generation, prevention of lodging, increase of the yield, enhancement of cold hardiness, retainment of freshness, enhancement of greenness, retainment of greenness, raising of healthy seedlings, promotion of organ development, increase of the tillering number, shortening of the time period required for growth, alleviation of harmful side effects of chemicals, or increase of survival upon cutting and the like (Patent Literature 1 and the like).

Since a 5-aminolevulinic acid is a water soluble substance, in a method for fertilizing plants therewith, it was applied to plants in a state in which it was dissolved in a liquid.

### [Citation List]

### [Patent Literature]

[Patent Literature 1] JP-A-04-338305

EP 714600 A2 discloses a method for improving plant salt-tolerance.
Smolen at al. Acta Sci. Pol., Hortorum Cultus 9(1) 2010, 25-36 disclose the effect of plant biostimulation with 'Pentakeep V'.
WO2012/003782 A1 discloses compositions for improving soil.

### [Summary of Invention]

### [Technical Problem]

However, a method for fertilizing plants with a solution was a very troublesome method which includes, for example, spraying on plant bodies and irrigating roots.

Moreover, it is known that when a 5-aminolevulinic acid is given with being dissolved in a solution, duration of growth promoting effect obtained by the 5-aminolevulinic acid is about 2 weeks, and many regular administrations are needed for obtaining a sufficient growth promoting effect.

Therefore, according to the present invention, there is provided a means for achieving an excellent plant growth promoting effect of a 5-aminolevulinic acid easily even with a few applications thereof.

### [Solution to Problem]

Then the present inventors studied a means for applying a 5-aminolevulinic acid, and they have completed the present invention, of which application is easy, by forming a 5-aminolevulinic acid and a solid fertilizer raw material into a solid state substance, coating the solid state substance to obtain a solid fertilizer by request, and finding that a remarkable plant growth promoting effect can be obtained even with a few applications thereof.

The present invention provides the following [1] to [6] .
[1] A solid fertilizer comprising the following components (A) and (B):
   (A) a 5-aminolevulinic acid represented by the following general formula (I)

      R²R¹NCH₂COCH₂CH₂COR³ (I)

      wherein R¹ and R² are each independently a hydrogen atom, an alkyl group, an acyl group, an alkoxycarbonyl group, an aryl group, or an aralkyl group; and R³ is a hydroxy group, an alkoxy group, an acyloxy group, an alkoxycarbonyloxy group, an aryloxy group, an aralkyloxy group or an amino group, or a salt of the acid and
   (B) a solid fertilizer raw material, comprising 1 % by mass or more, as the nitrogen content, of at least one selected from the group consisting of ammonium nitrate, ammonium sulfate, and potassium nitrate in the solid fertilizer or 1 % by mass or more, in terms of P₂O₅, of a phosphoric acid in the solid fertilizer, wherein a surface of the solid fertilizer is coated with a coating material, wherein the coating material is a petroleum wax.
[2] The solid fertilizer according to [1], wherein a shape of the solid fertilizer is selected from granular shape and aggregated shape.
[3] A process for producing a solid fertilizer according to [1], wherein the process comprising adding a solution comprising a 5-aminolevulinic acid, or a salt of the acid or the derivative (A) represented by the following general formula (I)

   R²R¹NCH₂COCH₂CH₂COR³ (I)

   wherein R¹ and R² are each independently a hydrogen atom, an alkyl group, an acyl group, an alkoxycarbonyl group, an aryl group, or an aralkyl group; and R³ is a hydroxy group, an alkoxy group, an acyloxy group, an alkoxycarbonyloxy group, an aryloxy group, an aralkyloxy group or an amino group, into a solid fertilizer raw material (B), comprising 1 % by mass or more, as the nitrogen content, of at least one selected from the group consisting of ammonium nitrate, ammonium sulfate, and potassium nitrate in the solid fertilizer or 1 % by mass or more, in terms of P₂O₅, of a phosphoric acid in the solid fertilizer, by spray and drying the mixture.
[4] The process for producing the solid fertilizer according to [3], further comprising coating the solid fertilizer with a molten waxy material.
[5] The process for producing the solid fertilizer according to [4], wherein the waxy material is a petroleum wax.
[6] The process for producing the solid fertilizer according to [5], wherein the petroleum wax is paraffin wax.

### [Effects of Invention]

Since the solid fertilizer of the present invention is excellent in sustained-release of a 5-aminolevulinic acid and one application of the solid fertilizer corresponds to several applications of a solution, the number of applications can be decreased and the effort can be greatly reduced. Moreover, a remarkably excellent plant growth promoting effect can be obtained by the interaction with a fertilizer component which is mixed in the solid fertilizer.

### [Brief Description of Drawings]

[Figure 1] Figure 1 is a graph showing a difference of a growth promoting effect between a 5-aminolevulinic acid-containing solid fertilizer and a 5-aminolevulinic acid free fertilizer.
[Figure 2] Figure 2 is a graph showing a difference of a growth promoting effect between a 5-aminolevulinic acid-containing solid fertilizer and a 5-aminolevulinic acid-free fertilizer.
[Figure 3] Figure 3 is a graph showing a difference of a growth promoting effect between a 5-aminolevulinic acid-containing solid fertilizer and a 5-aminolevulinic acid-free fertilizer.
[Figure 4] Figure 4 is a graph showing a difference of a growth promoting effect between a 5-aminolevulinic acid-containing solid fertilizer and a 5-aminolevulinic acid-free fertilizer.
[Figure 5] Figure 5 is a graph showing a difference of a growth promoting effect between a 5-aminolevulinic acid-containing solid fertilizer and a 5-aminolevulinic acid-free fertilizer.
[Figure 6] Figure 6 is a graph showing a difference of a growth promoting effect between a 5-aminolevulinic acid-containing solid fertilizer and a 5-aminolevulinic acid-free fertilizer.

### [Description of Embodiments]

The solid fertilizer of the present invention comprises (A) a 5-aminolevulinic acid represented by a general formula (I), or a salt of the acid and (B) a solid fertilizer raw material.

In the general formula (I), the compound with R¹ and R² being a hydrogen atom and R³ being a hydroxy group is a 5-aminolevulinic acid.

In the general formula (I), as the alkyl group given in R¹ and R², a linear- or branched-chain alkyl group with the carbon number of 1 to 24 is preferred, and an alkyl group with the carbon number of 1 to 18 is more preferred, and especially an alkyl group with the carbon number of 1 to 6 is preferred. Example of the alkyl group with the carbon number of 1 to 6 includes a methyl group, an ethyl group, an n-propyl group, an isopropyl group, an n-butyl group, a sec-butyl group and the like. As the acyl group, a linear- or branched-chain alkanoyl group, an alkenylcarbonyl group, or an aroyl group with the carbon number of 1 to 12 is preferred, and especially an alkanoyl group with the carbon number of 1 to 6 is preferred. Example of the acyl group includes a formyl group, an acetyl group, a propionyl group, a butyryl group, and the like. As the alkoxycarbonyl group, an alkoxycarbonyl group with the total carbon number of 2 to 13 is preferred, and especially an alkoxycarbonyl group with the carbon number of 2 to 7 is preferred. Example of the alkoxycarbonyl group includes a methoxycarbonyl group, an ethoxycarbonyl group, an n-propoxycarbonyl group, an isopropoxycarbonyl group, and the like. As the aryl group, an aryl group with the carbon number of 6 to 16 is preferred, and it includes, for example, a phenyl group, a naphthyl group, and the like. As the aralkyl group, a group consisting of an aryl group with the carbon number of 6 to 16 and the above alkyl group with carbon number of 1 to 6 is preferred, and it includes, for example, a benzyl group and the like.

As the alkoxy group given in R³, a linear- or branched-chain alkoxy group with the carbon number of 1 to 24 is preferred, an alkoxy group with the carbon number of 1 to 16 is more preferred, and especially an alkoxy group with the carbon number of 1 to 12 is preferred. Example of the alkoxy group includes a methoxy group, an ethoxy group, an n-propoxy group, an isopropoxy group, an n-butoxy group, a pentyloxy group, a hexyloxy group, an octyloxy group, a decyloxy group, a dodecyloxy group, and the like. As the acyloxy group, a linear- or branched-chain alkanoyloxy group with the carbon number of 1 to 12 is preferred, and especially an alkanoyloxy group with the carbon number of 1 to 6 is preferred. Example of the acyloxy group includes an acetoxy group, a propionyloxy group, a butyryloxy group, and the like. As the alkoxycarbonyloxy group, an alkoxycarbonyloxy group with the total carbon number of 2 to 13 is preferred, and especially an alkoxycarbonyloxy group with the total carbon number of 2 to 7 is preferred. Example of the alkoxycarbonyloxy group includes a methoxycarbonyloxy group, an ethoxycarbonyloxy group, an n-propoxycarbonyloxy group, an isopropoxycarbonyloxy group, and the like. As the aryloxy group, an aryloxy group with the carbon number of 6 to 16 is preferred, and it includes, for example, a phenoxy group, a naphthyloxy group, and the like. As the aralkyloxy group, an aralkyloxy group having the above-mentioned aralkyl group is preferred, and it includes, for example, a benzyloxy group and the like.

A 5-aminolevulinic acid ester may also be preferred, a 5-aminolevulinic acid alkyl ester is more preferred, especially a 5-aminolevulinic acid C₁₋₆ alkyl ester such as a 5-aminolevulinic acid methyl ester, a 5-aminolevulinic acid ethyl ester, a 5-aminolevulinic acid propyl ester, a 5-aminolevulinic acid butyl ester, a 5-aminolevulinic acid pentyl ester, and a 5-aminolevulinic acid hexyl ester is preferred, and especially a 5-aminolevulinic acid methyl ester or a 5-aminolevulinic acid hexyl ester is most preferred.

As the salt of a 5-aminolevulinic acid acid addition salts such as hydrochlorides, phosphates, nitrates, sulfates, sulfonates, acetates, propionates, butyrates, valerates, citrates, fumarates, maleates, and malates and metal salts such as sodium salts, potassium salts, and calcium salts are preferred, and hydrochlorides, phosphates, nitrates, or sulfonates are more preferred.

A 5-aminolevulinic acid and a salt thereof can be used alone or by combining two or more of them.

The component (A) of the solid fertilizer of the present invention is preferably a salt of a 5-aminolevulinic acid where R¹ and R² in the general formula (1) are a hydrogen atom and R³ is a hydroxyl group. A 5-aminolevulinic acid salt is preferred where the salt is hydrochlorides, phosphates, nitrates, or sulfonates, and 5-aminolevulinic acid hydrochloride and 5-aminolevulinic acid phosphate are most preferred.

(A) a 5-aminolevulinic acid, or a salt of the acid can be produced by any method of chemical synthesis, production by a microorganism, and production by an enzyme. The product can be used just as it is without separation or purification thereof as long as it does not contain a substance harmful to plants. Moreover, if it contains a harmful substance, it can be used after the harmful substance is properly removed to a level where no harmful action is observed.

The content of the component (A) in the solid fertilizer of the present invention is preferably 0.0001 to 1 % by mass, more preferably 0.003 to 0.6 % by mass, and especially 0.003 to 0.3 % by mass in terms of a plant growth promoting action and the action of sustained-release of the component (A).

As (B) the solid fertilizer raw material used in the solid fertilizer of the present invention, it may be any raw material for a fertilizer as long as it can be present in solid state at normal temperature, and it includes a solid organic matter such as humus such as peat moss/black peat, soybean meal, rapeseed meal, fish meal, and feather meal; and in addition to these, a plant growth regulator, saccharides, an amino acid, an organic acid, an alcohol, a vitamin, a mineral, and the like.

Among the above mentioned solid organic matters, humus is more preferred.

The plant growth regulator can include, for example, brassinolides such as epibrassinolide, a choline agent such as choline chloride and choline nitrate, indolebutyric acid, indoleacetic acid, an ethychlozate agent, a 1-naphthylacetamide agent, an isoprothiolane agent, a nicotinamide agent, a hydroxyisoxazole agent, a calcium peroxide agent, a benzylaminopurine agent, a methasulfocarb agent, an oxyethylene docosanol agent, an ethephon agent, a chlochinphonac agent, gibberellin, a streptomycin agent, a daminozide agent, a benzylaminopurine agent, a 4-CPA agent, an ancymidol agent, an inabenfide agent, a uniconazole agent, a chlormequat agent, a dikegulac agent, a mefluidide agent, a calcium carbonate agent, a piperonyl butoxide agent, and the like.

The saccharides include, for example, glucose, sucrose, xylitol, sorbitol, galactose, xylose, mannose, arabinose, madurose, sucrose, ribose, rhamnose, fructose, maltose, lactose, maltotriose, and the like.

The amino acid can include, for example, asparagine, glutamine, histidine, tyrosine, glycine, arginine, alanine, tryptophan, methionine, valine, proline, leucine, lysine, isoleucine, a glutamic acid, an aspartic acid, and the like.

The organic acid can include, for example, a formic acid, an acetic acid, a propionic acid, a butyric acid, a valeric acid, an oxalic acid, a phthalic acid, a benzoic acid, a lactic acid, a citric acid, a tartaric acid, a malonic acid, a malic acid, a succinic acid, a glycolic acid, a maleic acid, a caproic acid, a caprylic acid, a myristic acid, a stearic acid, a palmitic acid, a pyruvic acid, an α-ketoglutaric acid, a levulinic acid, and the like.

The alcohol includes, for example, methanol, ethanol, propanol, butanol, pentanol, hexanol, glycerol, and the like.

The vitamin can include, for example, nicotinamide, vitamin B6, vitamin B12, vitamin B5, vitamin C, vitamin B13, vitamin B1, vitamin B3, vitamin B2, vitamin K3, vitamin A, vitamin D2, vitamin D3, vitamin K1, α-tocopherol, β-tocopherol, γ-tocopherol, σ-tocopherol, a p-hydroxybenzoic acid, biotin, a folic acid, a nicotinic acid, a pantothenic acid, an α-lipoic acid, and the like.

The mineral can include, for example, nitrogen, phosphorus, potassium, calcium, boron, manganese, magnesium, zinc, copper, iron, molybdenum, magnesium, and the like.

According to claim 1, as a type of the nitrogen source potassium nitrate, ammonium sulfate, or ammonium nitrate are used. The concentration of the nitrogen source is 1 % by mass or more of nitrogen in the solid fertilizer of the present invention, and preferable 1 to 50 % by mass of nitrogen.

According to claim 1, as a type of the phosphorus source, a phosphoric acid is used. The concentration of the phosphorus source is 1 % by mass or more of phosphorus in terms of P₂O₅ in the solid fertilizer of the present invention, and preferable 1 to 50 % by mass of phosphorus.

As (B) the solid fertilizer raw material, it is preferable to comprise at least the above-mentioned solid organic matter, and especially it is preferable to comprise at least humus. It is preferable to comprise 10 to 90 % by mass of the solid organic matter in the solid fertilizer of the present invention, and it is more preferable to comprise 20 to 60 % by mass of the solid organic matter. Moreover, it is preferable to comprise in (B) the solid fertilizer raw material at least the above-mentioned solid organic matter and the nitrogen source and/or the phosphorus source in terms of the plant growth promoting effect. Now as the nitrogen source, at least one selected from the group consisting of potassium nitrate, ammonium sulfate and ammonium nitrate is used, and the content of this nitrogen source is 1 % by mass or more, especially 1 to 50 % by mass of nitrogen in the solid fertilizer of the present invention. Also as the phosphorus source, a phosphoric acid is used. The content of the phosphorus source is in the solid fertilizer of the present invention 1 % by mass or more, especially 1 to 50 % by mass of phosphorus in terms of P₂O₅.

The shape of (B) the solid fertilizer raw material used in the present invention includes, but is not limited to, a powdery, granular or aggregated shape, and a granular shape is preferred in terms of the production of the solid fertilizer.

The particle size of (B) the solid fertilizer raw material used in the present invention is, but is not limited to, 0.5 to 10 mm preferably in terms of management and 1.0 to 6.0 mm more preferably.

The shape of the solid fertilizer of the present invention includes, but is not limited to, a granular or aggregated shape, and a granular shape is preferred in terms of the easiness of production.

The particle size of the solid fertilizer of the present invention is, but is not limited to, 0.5 to 10 mm preferably in terms of management and 1.0 to 6.0 mm more preferably.

Moreover, the surface of the solid fertilizer of the present invention is coated with a coating material. In order to control the sustained-release of a 5-aminolevulinic acid, it is preferable to coat the surface. The "coating material" used in the present invention is petroleum wax such as paraffin wax, microcrystalline wax, and petrolatum. Any of these can be used alone or by combining two or more of them. Among these coating materials, especially paraffin wax is preferred in terms of the sustained-release of a 5-aminolevulinic acid.

The amount of coating by the coating material is, in relation to the total weight of the solid fertilizer of the present invention, preferably 2 to 20 % by mass and more preferably 4 to 15 % by mass in terms of the sustained-release of a 5-aminolevulinic acid.

In the solid fertilizer of the present invention, the residual ratio of a 5-aminolevulinic acid under the condition of "40°C, after 1 month" is desirably 80% or more, preferably 85% or more, and more preferably 90% or more.

For the solid fertilizer of the present invention, any can be used as long as it comprises the above-mentioned components (A) and (B), and it is preferable to produce the solid fertilizer of the present invention by combining the above-mentioned components (A) and (B), granulating them, and then coating its surface with a coating material by request. The granulating means is not particularly limited, but a means is essential according to claim 3, which includes a step of spraying the component (A) on the component (B) and a step of drying the obtained granulated substance. Moreover, a coated granulated substance can be obtained by including a step of coating the obtained granulated substance with a molten waxy material.

More specifically, the solid fertilizer of the present invention can be produced by, with rolling the component (B), adding the component (A)-containing solution by spray to be adhered to the component (B). However, in addition to this, after the component (A)-containing solution is added to a part of the component (B) by spray, they may be mixed, or the component (A)-containing solution may be added to the granulated one by spray.

After the component (A) is adhered uniformly to the surface of the component (B), they are dried with being rolled. Usually natural drying is sufficient, but they may be dried forcedly using a warm breeze.

A device used for the present invention can be any of a continuous or batch device, and any can be used as long as effects of the mixture and the granulation are sufficiently obtained. An example thereof includes a rotary mixing drum, a pan type granulator, a pellet granulator, a tablet type granulator, and the like.

The coating step adds the obtained granulated substance to a molten waxy material and results in melt coating thereof.

For heating the granulated substance until the waxy material is molten, the granulated substance may be heated in advance by a preheater or may be heated in a rolling device. The temperature for heating the granulated substance may be temperature where the added waxy material is molten, but it is preferably temperature 10 to 20°C higher than a melting point of the waxy material.

After the waxy material is adhered uniformly to the surface of the granulated substance, the temperature is lowered to less than the melting point of the waxy material with rolling the granulated substance. Usually natural cooling is sufficient, but it may be cooled down forcedly using a cool breeze.

After the waxy material is adhered uniformly to the surface of the granulated substance, the coated granulated substance may be further coated with diatomaceous earth.

The subject plant which is applicable to the solid fertilizer of the present invention is all the plants which exhibit an effect by an administration of a 5-aminolevulinic acid-containing solution. It includes, but not limited to, preferably leaf vegetables and more preferably Japanese mustard spinach, leaf lettuce, barley, and tomato.

The solid fertilizer of the present invention is used by being administered to soil around the plant. It may be given to the plant before rooting the plant, rooting the plant cuttings, or the like. Furthermore, it may be added in water during hydroponics.

The application time of the solid fertilizer of the present invention to the plant can be anytime during a period when the plant grows.

The amount of the solid fertilizer of the present invention applied may be 0.6 to 600 kg/10 a as the amount of the solid fertilizer.

### [Examples]

The following will specifically describe the present invention with reference to Examples, but they are cited only for illustration and do not limit the present invention.

### [Example 1] (Comparative) Production of a 5-aminolevulinic acid-containing solid fertilizer-1

A fertilizer raw material liquid was prepared to which 40 g of a 3% aqueous solution of 5-aminolevulinic acid hydrochloride (ALA·HCL), 140 g of ammonium sulfate, 180 g of distilled water, and 40 g of citric acid had been added. For the fertilizer raw material in which a 5-aminolevulinic acid is comprised, black peat (manufactured by RHP: VRIEZENVEEN substrate) was used. A pan type granulator was heated to temperature of about 50°C. After it was heated, 40 g of black peat (water content 72%) was placed therein and then rolled in the pan type granulator. It was rolled in the pan type granulator for 30 minutes to be granulated with spraying 25 g of the fertilizer raw material liquid to black peat. Then, the granulated product was dried at 40°C overnight (until no mass change was observed) to obtain a 5-aminolevulinic acid-containing solid fertilizer A. Table 1 or 2 shows composition of 5-aminolevulinic acid-containing solid fertilizer A before and after drying. The particle size of the obtained 5-aminolevulinic acid-containing solid fertilizer A was in the range of 4 to 6 mm.

**[Table 1]**

| | |
|---|---|
| ALA-containing solid fertilizer before drying | |
| Black peat | 61.54% |
| (moisture content about 72%) | |
| (NH₄)₂SO₄ | 13.5% |
| Pure water | 20.99% |
| Citric acid | 3.85% |
| ALA·HCl | 0.12% |
| Total | 100% |

**[Table 2]**

| | |
|---|---|
| ALA-containing solid fertilizer after drying | |
| Black peat | 43.08% |
| (NH₄)₂SO₄ | 33.75% |
| ALA·HCl | 0.30% |
| Citric acid | 9.62% |
| Moisture content | 13.25% |
| Total | 100% |

### [Example 2] Production of a 5-aminolevulinic acid-containing solid fertilizer-2

Paraffin wax (melting point 48 to 50°C) was poured into a bath, heated to 55°C and dissolved. Then 5-aminolevulinic acid-containing solid fertilizer A was immersed in the bath for about 30 minutes until no bubble was formed. After that, extra paraffin wax was drained, temperature of the solid fertilizer was lowered with rolling it in the pan type granulator, and then the solid fertilizer was dried. Afterwards diatomaceous earth was dredged on 5-aminolevulinic acid-containing solid fertilizer A coated with paraffin wax to obtain 5-aminolevulinic acid-containing solid fertilizer B. The particle size of the obtained 5-aminolevulinic acid-containing solid fertilizer B was in the range of 4 to 6 mm.

At this time, a similar solid fertilizer which did not contain a 5-aminolevulinic acid was also coated with paraffin wax.

In order to test the sustained-release of a 5-aminolevulinic acid as well as the plant growth promoting effect, tests were conducted using the coated 5-aminolevulinic acid-containing solid fertilizer B.

### [Example 3] Growth promoting effect of Japanese mustard spinach by 5-aminolevulinic acid-containing solid fertilizer B

The growth promoting effect of Japanese mustard spinach was tested using the solid fertilizer B obtained in Example 2. Kuroboku soil was placed in a pot with a capacity of 10 × 10 × 10 cm, and then 4 seeds of Japanese mustard spinach were disseminated therein. 14 Days after dissemination, at the time of development of the true leaf, Japanese mustard spinach was subjected to thinning to 1 strain per a pot. After that, Japanese mustard spinach in each pot was fertilized with 5-aminolevulinic acid-containing solid fertilizer B coated with paraffin wax and the solid fertilizer which did not contain a 5-aminolevulinic acid, respectively. The amount of the solid fertilizer applied was adjusted so that it was 10 kg nitrogen per 10 a in terms of the amount of the element nitrogen. At this time, the amount of a 5-aminolevulinic acid applied was 300 g/10 a. 21 Days after application, Japanese mustard spinach was harvested, and then growth increment thereof was evaluated by checking its dry weight (n=3). The results are shown in Table 3.

**[Table 3]**

| Japanese mustard spinach growth promoting effect of a 5-aminolevulinic acid-containing solid fertilizer | | | |
|---|---|---|---|
| | 5-aminolevulinic acid-free fertilizer | 5-aminolevulinic acid-containing solid fertilizer | Rate of increase of dry weight by a 5-aminolevulinic acid (%) |
| Japanese mustard spinach dry weight (g) | 7.14±0.88 | 8.17±0.34 | 14 |

As shown in Table 3, about 14% of dry weight was increased by application of the 5-aminolevulinic acid-containing solid fertilizer. Thus it was found that the fertilizer in which 5-aminolevulinic acid was comprised has a plant growth promoting effect.

### [Example 4] Leaf lettuce growth promoting effect of 5-aminolevulinic acid-containing solid fertilizer B

The leaf lettuce growth promoting effect was tested using the solid fertilizer B obtained in Example 2. Kuroboku soil was placed in a pot with a capacity of 10 × 10 × 10 cm, and then 4 seeds of leaf lettuce were disseminated therein. 14 Days after dissemination, at the time of development of the true leaf, the leaf lettuce was subjected to thinning to 1 strain per a pot and then fertilized with a compound fertilizer (N-P-K=8-8-8) so that its amount was 10 kg nitrogen per 10 a in terms of the amount of the element nitrogen. After that, the leaf lettuce in each pot was fertilized with 5-aminolevulinic acid-containing solid fertilizer B coated with paraffin wax and a solid fertilizer which did not contain a 5-aminolevulinic acid, respectively. The amount of each of the solid fertilizers applied was adjusted so that it was 3 kg nitrogen per 10 a in terms of the amount of the element nitrogen. At this time, the amount of a 5-aminolevulinic acid applied was 90 g/10 a. 35 Days after application, the leaf lettuce was harvested, and then growth increment thereof was evaluated by checking its fresh weight (n=3). The results are shown in Table 4.

**[Table 4]**

| Leaf lettuce growth promoting effect of a 5-aminolevulinic acid solid fertilizer | | | |
|---|---|---|---|
| | 5-aminolevulinic acid-free fertilizer | 5-aminolevulinic acid-containing solid fertilizer | Rate of increase of fresh weight by a 5-aminolevulinic acid (%) |
| Leaf lettuce fresh weight (g) | 1.71±1.09 | 4.30±1.69 | 151 |

As shown in Table 4, about 151% of fresh weight was increased by application of the 5-aminolevulinic acid-containing solid fertilizer. Thus it was found that the fertilizer in which 5-aminolevulinic acid was comprised has a plant growth promoting effect.

### [Example 5] Barley growth promoting effect of 5-aminolevulinic acid-containing solid fertilizer B

The barley growth promoting effect was tested using the solid fertilizer B obtained in Example 2. Kuroboku soil was placed in a pot with a capacity of 10 × 10 × 10 cm, and then 15 seeds of barley were disseminated therein. After dissemination, at the time of development of 5 true leaves, the barley was subjected to thinning to 5 strains per a pot and then fertilized with a compound fertilizer (N-P-K=8-8-8) so that its amount was 10 kg nitrogen per 10 a in terms of the amount of the element nitrogen. After that, the barley in each pot was fertilized with 5-aminolevulinic acid-containing solid fertilizer B coated with paraffin wax and a solid fertilizer which did not contain a 5-aminolevulinic acid, respectively. The amount of each of the solid fertilizers applied was adjusted so that it was 3 kg nitrogen per 10 a in terms of the amount of the element nitrogen. At this time, the amount of a 5-aminolevulinic acid applied was 90 g/10 a. 60 Days after application, the barley was harvested, and then growth increment thereof was evaluated by checking its fresh weight (n=2). The results are shown in Table 5.

**[Table 5]**

| Barley growth promoting effect of a 5-aminolevulinic acid solid fertilizer | | | |
|---|---|---|---|
| | 5-aminolevulinic acid-free fertilizer | 5-aminolevulinic acid-containing solid fertilizer | Rate of increase of fresh weight by a 5-aminolevulinic acid (%) |
| Fresh weight of 5 strains of barley (g) | 31.6±1.5 | 34.0±1.4 | 11 |

As shown in Table 5, about 11% of fresh weight was increased by application of the 5-aminolevulinic acid-containing solid fertilizer. Thus it was found that the fertilizer in which 5-aminolevulinic acid was comprised has a plant growth promoting effect.

### [Example 6] Tomato growth promoting effect of 5-aminolevulinic acid-containing solid fertilizer B

The tomato growth promoting effect was tested using the solid fertilizer B obtained in Example 2. Kuroboku soil was placed in a pot with a capacity of 10 × 10 × 10 cm, and then 4 seeds of tomato were disseminated therein. After dissemination, at the time of development of 3 true leaves, the tomato was subjected to thinning to 1 strain per a pot and then fertilized with a compound fertilizer (N-P-K=8-8-8) so that its amount was 10 kg nitrogen per 10 a in terms of the amount of the element nitrogen. After that, the tomato in each pot was fertilized with 5-aminolevulinic acid-containing solid fertilizer B coated with paraffin wax and a solid fertilizer which did not contain a 5-aminolevulinic acid, respectively. The amount of each of the solid fertilizers applied was adjusted so that it was 3 kg nitrogen per 10 a in terms of the amount of the element nitrogen. At this time, the amount of a 5-aminolevulinic acid applied was 90 g/10 a. 68 Days after application, the tomato was harvested, and then growth increment thereof was evaluated by checking its fresh weight (n=3). The results are shown in Table 6.

**[Table 6]**

| Tomato growth promoting effect of a 5-aminolevulinic acid solid fertilizer | | | |
|---|---|---|---|
| | 5-aminolevulinic acid-free fertilizer | 5-aminolevulinic acid-containing solid fertilizer | Rate of increase of fresh weight by a 5-aminolevulinic acid (%) |
| fresh weight of tomato (g) | 57.0±3.9 | 66.1±8.2 | 16 |

As shown in Table 6, about 16% of fresh weight was increased by application of the 5-aminolevulinic acid-containing solid fertilizer. Thus it was found that the fertilizer in which 5-aminolevulinic acid was comprised has a plant growth promoting effect.

### [Comparative Example] Growth promoting effect of a solution which comprises a 5-aminolevulinic acid

Kuroboku soil was placed in a pot with a capacity of 10 × 10 × 10 cm, and then 4 seeds of Japanese mustard spinach were disseminated therein. 14 Days after dissemination, at the time of development of the true leaf, Japanese mustard spinach was subjected to thinning to 1 strain per a pot. After that, Japanese mustard spinach in each pot was fertilized with 100 mL/pot of a liquid fertilizer in which 5-aminolevulinic acid was added in 500× diluent of HANAKOJO (manufactured by Sumitomo chemical garden products inc., nitrogen-phosphoric acid-potassium=5-10-5) which is a commercial liquid fertilizer so that the 5-aminolevulinic acid was 10 mg/L and 100 mL/pot of a liquid fertilizer in which a 5-aminolevulinic acid was not added, respectively, once a week and three times in total. 21 Days after the first fertilization, Japanese mustard spinach was harvested, and then growth increment thereof was evaluated by checking its dry weight (n=2). The results are shown in Table 7. The amount of ALA applied was the same as Example 1, 300 g/10 a.

**[Table 7]**

| Growth promoting effect of a 5-aminolevulinic acid-containing solution (liquid fertilizer) | | | |
|---|---|---|---|
| | 5-aminolevulinic acid-free fertilizer | 5-aminolevulinic acid-containing liquid fertilizer | Rate of increase of dry weight by a 5-aminolevulinic acid (%) |
| Japanese mustard spinach dry weight (g) | 10.61 | 11.24 | 6 |

As shown in Table 7, 6% of increase in dry weight was observed by continuing to give an aqueous solution three times in total in which 5-aminolevulinic acid hydrochloride was dissolved. This was smaller than the plant growth promoting effect which could be identified by one application of the solid fertilizer. Thus it was revealed that the 5-aminolevulinic acid-containing solid fertilizer could result in the growth promoting effect which was similar to or more than that obtained by dissolving 5-aminolevulinic acid hydrochloride in an aqueous solution with decreasing the number of applications.

### [Example 7] Production of a 5-aminolevulinic acid-containing solid fertilizer-3 (Production of a nitrogen or phosphorus-compounding solid fertilizer)

A 5-aminolevulinic acid-containing solid fertilizer was obtained in the similar way as Example 1 except using urea, magnesium nitrate, potassium nitrate, ammonium sulfate, and ammonium nitrate individually as the nitrogen source. Then the solid fertilizer was coated with paraffin wax in the similar way as Example 2 to obtain 5-aminolevulinic acid-containing solid fertilizers C, D, E, F, and G individually. At this time, the amount of urea, magnesium nitrate, potassium nitrate, ammonium sulfate, and ammonium nitrate was adjusted individually so that the amount of nitrogen was 2.6% as the nitrogen component in the solid fertilizers.

Furthermore, solid fertilizer H was prepared in which phosphoric acid was used as the phosphorus source in the similar way. At this time, the amount of phosphoric acid compounded was adjusted so that the amount of phosphorus in the solid fertilizer was 8% in terms of P₂O₅.

Moreover, solid fertilizers c, d, e, f, g, and h which do not contain a 5-aminolevulinic acid were also prepared in the similar way.

The prepared solid fertilizers were shown in Table 8.

**[Table 8]**

| | Composition of the fertilizer |
|---|---|
| Fertilizer c | 5-aminolevulinic acid free and urea-containing fertilizer |
| Fertilizer d | 5-aminolevulinic acid free and magnesium nitrate-containing fertilizer |
| Fertilizer e | 5-aminolevulinic acid free and potassium nitrate-containing fertilizer |
| Fertilizer f | 5-aminolevulinic acid free and ammonium sulfate-containing fertilizer |
| Fertilizer g | 5-aminolevulinic acid free and ammonium nitrate-containing fertilizer |
| Fertilizer h | 5-aminolevulinic acid free and phosphoric acid-containing fertilizer |
| Fertilizer C | 5-aminolevulinic acid-containing and urea-containing fertilizer |
| Fertilizer D | 5-aminolevulinic acid-containing and magnesium nitrate-containing fertilizer |
| Fertilizer E | 5-aminolevulinic acid-containing and potassium nitrate-containing fertilizer |
| Fertilizer F | 5-aminolevulinic acid-containing and ammonium sulfate-containing fertilizer |
| Fertilizer G | 5-aminolevulinic acid-containing and ammonium nitrate-containing fertilizer |
| Fertilizer H | 5-aminolevulinic acid-containing and phosphoric acid-containing fertilizer |

| | |
|---|---|
| Fertilizers c to h, C and D are comparative examples. | |

### [Example 8] Influence of a difference in composition of 5-aminolevulinic acid-containing solid fertilizer on the growth promoting effect on Japanese mustard spinach

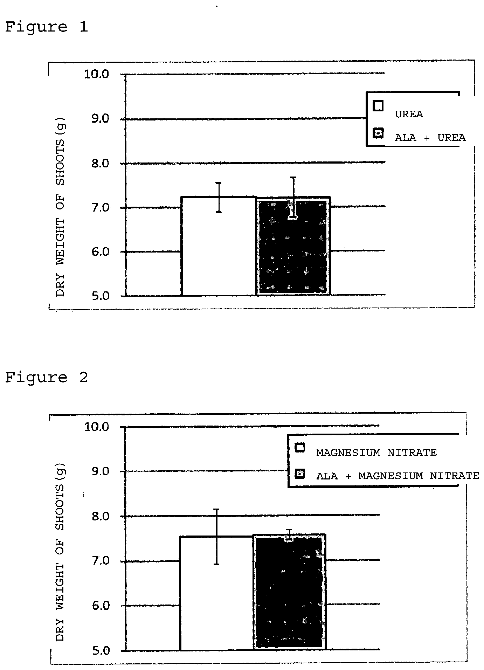

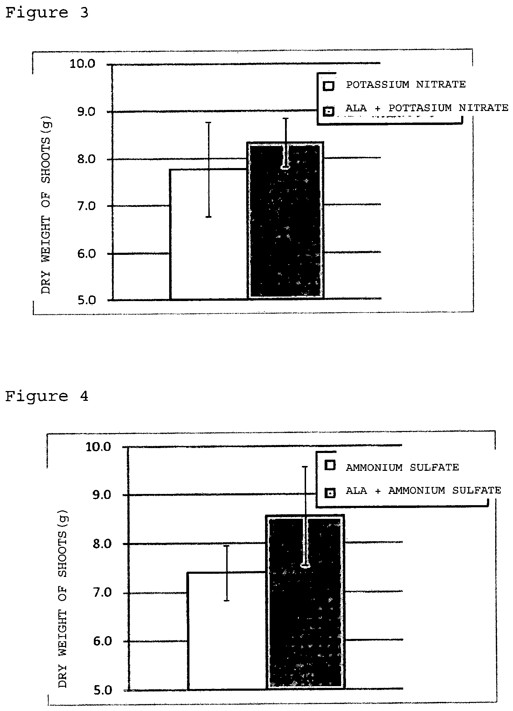

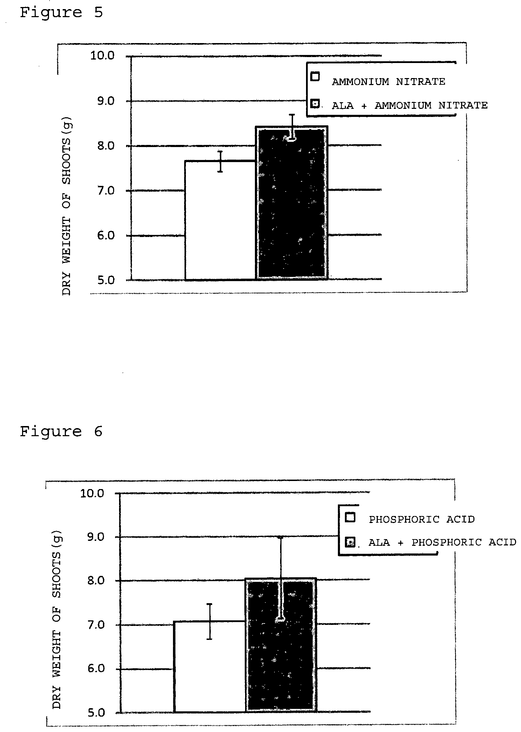

Kuroboku soil was placed in a pot with a capacity of 10 × 10 × 10 cm, and then 4 seeds of Japanese mustard spinach were disseminated therein. 7 Days after dissemination, at the time of development of the true leaf, Japanese mustard spinach was subjected to thinning to 1 strain per a pot and then fertilized with 3.8 g of each of solid fertilizers C, D, E, F, and G, which contain a 5-aminolevulinic acid coated with paraffin wax and have different nitrogen component individually, solid fertilizer H in which phosphoric acid was compounded as the phosphorus source, and solid fertilizers c, d, e, f, g, and h which do not contain a 5-aminolevulinic acid individually. At this time, except solid fertilizers H and h, Japanese mustard spinach was fertilized with solid fertilizers using potassium phosphate and potassium hydrogen phosphate separately so that the amount of phosphorus was 10 kg phosphorus/10 a in terms of the amount of the element phosphorus and the amount of potassium was 10 kg potassium/10 a in terms of the amount of the element potassium to prevent element deficiency during growth. Moreover, Japanese mustard spinach was fertilized with solid fertilizers H and h using ammonium sulfate separately so that their amount was 10 kg total nitrogen per 10 a in terms of the amount of the element nitrogen. 21 Days after fertilization, Japanese mustard spinach was harvested, and then growth increment thereof was evaluated by checking its dry weight (n=3). The results are shown in Figures 1 to 6.

As shown in Figures 1 to 6, it is understood that there is a case where potassium nitrate, ammonium sulfate, and ammonium nitrate were used as the nitrogen source or a case where phosphoric acid was used as the phosphorus source, as composition of the solid fertilizer which exhibits a plant growth promoting effect of 5-aminolevulinic acid hydrochloride.

## Claims

1. A solid fertilizer, comprising the following components (A) and (B):
(A) a 5-aminolevulinic acid represented by the following general formula (I)
R²R¹NCH₂COCH₂CH₂COR³ (I)
wherein R¹ and R² are each independently a hydrogen atom, an alkyl group, an acyl group, an alkoxycarbonyl group, an aryl group, or an aralkyl group; and R³ is a hydroxy group, an alkoxy group, an acyloxy group, an alkoxycarbonyloxy group, an aryloxy group, an aralkyloxy group or an amino group, or a salt of the acid and
(B) a solid fertilizer raw material, comprising 1 % by mass or more, as the nitrogen content, of at least one selected from the group consisting of ammonium nitrate, ammonium sulfate, and potassium nitrate in the solid fertilizer or 1 % by mass or more, in terms of P₂O₅, of a phosphoric acid in the solid fertilizer, wherein a surface of the solid fertilizer is coated with a coating material, wherein the coating material is a petroleum wax.

2. The solid fertilizer according to claim 1, wherein a shape of the solid fertilizer is selected from granular shape and aggregated shape.

3. A process for producing a solid fertilizer according to claim 1, wherein the process comprises:
adding a solution comprising a 5-aminolevulinic acid, or a salt of the acid (A) represented by the following general formula (I):
R²R¹NCH₂COCH₂CH₂COR³ (I)
wherein R¹ and R² are each independently a hydrogen atom, an alkyl group, an acyl group, an alkoxycarbonyl group, an aryl group, or an aralkyl group; and R³ is a hydroxy group, an alkoxy group, an acyloxy group, an alkoxycarbonyloxy group, an aryloxy group, an aralkyloxy group or an amino group,
into a solid fertilizer raw material (B) comprising 1 % by mass or more, as the nitrogen content, of at least one selected from the group consisting of ammonium nitrate, ammonium sulfate, and potassium nitrate in the solid fertilizer or 1 % by mass or more, in terms of P₂O₅, of a phosphoric acid in the solid fertilizer, by spray; and
drying the mixture.

4. The process according to claim 3, further comprising coating the solid fertilizer with a molten waxy material.

5. The process according to claim 4, wherein the waxy material is a petroleum wax.

6. The process according to claim 5, wherein the petroleum wax is paraffin wax.

## Patentansprüche

1. Festes Düngemittel, umfassend die folgenden Komponenten (A) und (B):
(A) Eine 5-Aminolevulinsäure der folgenden allgemeinen Formel (I)
R²R¹NCH₂COCH₂CH₂COR³ (I)
worin R¹ und R² jeweils unabhängig voneinander ein Wasserstoffatom, eine Alkylgruppe, eine Acylgruppe, eine Alkoxycarbonylgruppe, eine Arylgruppe oder eine Aralkylgruppe sind; und R³ eine Hydroxygruppe, eine Alkoxygruppe, eine Acyloxygruppe, eine Alkoxycarbonyloxygruppe, eine Aryloxygruppe, eine Aralkyloxygruppe oder eine Aminogruppe oder ein Salz der Säure ist
und
(B) einen Rohstoff für festes Düngemittel, der als Stickstoffgehalt 1 Massen-% oder mehr mindestens einen Bestandteil ausgewählt aus der Gruppe bestehend aus Ammoniumnitrat, Ammoniumsulfat und Kaliumnitrat in dem festen Düngemittel oder 1 Massen-% oder mehr, in Bezug auf P₂O₅, einer Phosphorsäure in dem festen Düngemittel enthält, wobei die Oberfläche des festen Düngemittels mit einem Beschichtungsmaterial beschichtet ist, wobei das Beschichtungsmaterial ein Erdölwachs ist.

2. Das feste Düngemittel nach Anspruch 1, wobei die Form des festen Düngemittels aus granulärer und aggregierter Form ausgewählt ist.

3. Ein Verfahren zur Herstellung eines festen Düngemittels nach Anspruch 1, wobei das Verfahren umfasst:
Zugabe einer Lösung, die eine 5-Aminolevulinsäure oder ein Salz der Säure (A) der folgenden allgemeinen Formel (I) enthält:
R²R¹NCH₂COCH₂CH₂COR³ (I)
worin R¹ und R² jeweils unabhängig voneinander ein Wasserstoffatom, eine Alkylgruppe, eine Acylgruppe, eine Alkoxycarbonylgruppe, eine Arylgruppe oder eine Aralkylgruppe sind; und R³ eine Hydroxygruppe, eine Alkoxygruppe, eine Acyloxygruppe, eine Alkoxycarbonyloxygruppe, eine Aryloxygruppe, eine Aralkyloxygruppe oder eine Aminogruppe ist,
in einen Rohstoff für festes Düngemittel (B), der als Stickstoffgehalt 1 Massen-% oder mehr mindestens einen Bestandteil ausgewählt aus der Gruppe bestehend aus Ammoniumnitrat, Ammoniumsulfat und Kaliumnitrat in dem festen Düngemittel oder 1 Massen-% oder mehr, in Bezug auf P₂O₅, eine Phosphorsäure in dem festen Düngemittel enthält, durch Sprühen; und
Trocknung der Mischung.

4. Das Verfahren nach Anspruch 3, weiterhin umfassend das Beschichten des festen Düngemittels mit einem geschmolzenen wachsartigen Material.

5. Das Verfahren nach Anspruch 4, wobei das wachsartige Material ein Erdölwachs ist.

6. Das Verfahren nach Anspruch 5, wobei das Erdölwachs Paraffinwachs ist.

## Revendications

1. Fertilisant solide comprenant les composants (A) et (B) suivants :
(A) un acide 5-aminolévulinique représenté par la formule générale (I) suivante
R²R¹NCH₂COCH₂CH₂COR³ (I)
dans laquelle R¹ et R² sont chacun indépendamment un atome d'hydrogène, un groupe alkyle, un groupe acyle, un groupe alcoxycarbonyle, un groupe aryle, ou un groupe aralkyle ; et R³ est un groupe hydroxy, un groupe alcoxy, un groupe acyloxy, un groupe alcoxycarbonyloxy, un groupe aryloxy, un groupe aralkyloxy ou un groupe amino, ou un sel de l'acide et
(B) une matière première de fertilisant solide, comprenant 1 % en masse ou plus, sous forme de la teneur en azote, d'au moins un choisi dans le groupe constitué par le nitrate d'ammonium, le sulfate d'ammonium et le nitrate de potassium dans le fertilisant solide ou 1 % en masse ou plus, en termes de P₂O₅, d'un acide phosphorique dans le fertilisant solide,
dans lequel une surface du fertilisant solide est enrobée d'un matériau d'enrobage, dans lequel le matériau d'enrobage est une cire de pétrole.

2. Fertilisant solide selon la revendication 1, dans lequel la forme du fertilisant solide est choisie parmi une forme granulaire et une forme agrégée.

3. Procédé pour produire un fertilisant solide selon la revendication 1, dans lequel le procédé comprend :
l'addition d'une solution comprenant un acide 5-aminolévulinique ou un sel de l'acide (A) représenté par la formule générale (I) suivante :
R²R¹NCH₂COCH₂CH₂COR³ (I)
dans laquelle R¹ et R² sont chacun indépendamment un atome d'hydrogène, un groupe alkyle, un groupe acyle, un groupe alcoxycarbonyle, un groupe aryle, ou un groupe aralkyle ; et R³ est un groupe hydroxy, un groupe alcoxy, un groupe acyloxy, un groupe alcoxycarbonyloxy, un groupe aryloxy, un groupe aralkyloxy ou un groupe amino,
dans une matière première de fertilisant solide, (B) comprenant 1 % en masse ou plus, sous forme de la teneur en azote, d'au moins un choisi dans le groupe constitué par le nitrate d'ammonium, le sulfate d'ammonium et le nitrate de potassium dans le fertilisant solide ou 1 % en masse ou plus, en termes de P₂O₅, d'un acide phosphorique dans le fertilisant solide, par pulvérisation ; et
le séchage du mélange.

4. Procédé selon la revendication 3, comprenant en outre l'enrobage du fertilisant solide avec un matériau cireux fondu.

5. Procédé selon la revendication 4, dans lequel le matériau cireux est une cire de pétrole.

6. Procédé selon la revendication 5, dans lequel la cire de pétrole est la cire de paraffine.
